(19) Europäisches Patentamt / European Patent Office / Office européen des brevets

(11) **EP 3 930 047 A1**

(12) **EUROPEAN PATENT APPLICATION**

(43) Date of publication:
**29.12.2021 Bulletin 2021/52**

(21) Application number: **20382549.2**

(22) Date of filing: **23.06.2020**

(51) Int Cl.:
***H01M 4/1391*** *(2010.01)* ***H01M 4/36*** *(2006.01)*
***H01M 4/525*** *(2010.01)* ***H01M 10/052*** *(2010.01)*
***H01M 10/0565*** *(2010.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
- **Fundación Centro de Investigación Cooperativa de Energías Alternativas, CIC Energigune Fundazioa**
  **01510 Vitoria-Gasteiz, Alava (ES)**
- **SAFT**
  **92300 Lavallois-Perret (FR)**

(72) Inventors:
- **ARRESE-IGOR, Mikel**
  **E-01510 Vitoria-Gasteiz, Álava (ES)**
- **MARTINEZ-IBAÑEZ, Maria**
  **E-01510 Vitoria-Gasteiz, Álava (ES)**
- **DEVARAJ, Shanmukaraj**
  **E-01510 Vitoria-Gasteiz, Álava (ES)**
- **DUMONT, Erwan**
  **33074 Bordeaux Cedex (FR)**
- **ARMAND, Michel**
  **E-01510 Vitoria-Gasteiz, Álava (ES)**
- **AGUESSE, Frédéric**
  **E-01510 Vitoria-Gasteiz, Álava (ES)**
- **LÓPEZ-ARANGUREN, Pedro**
  **E-01510 Vitoria-Gasteiz, Álava (ES)**

(74) Representative: **ABG Intellectual Property Law, S.L.**
**Avenida de Burgos, 16D**
**Edificio Euromor**
**28036 Madrid (ES)**

(54) **SINGLE-ION CONDUCTOR SALT ELECTROCHEMICAL CELL**

(57) The invention relates to solid state electrochemical cells comprising a single-ion conductor salt both in the catholyte and the electrolyte. In particular, the solid-state electrochemical cells are suitable for high voltage operation.

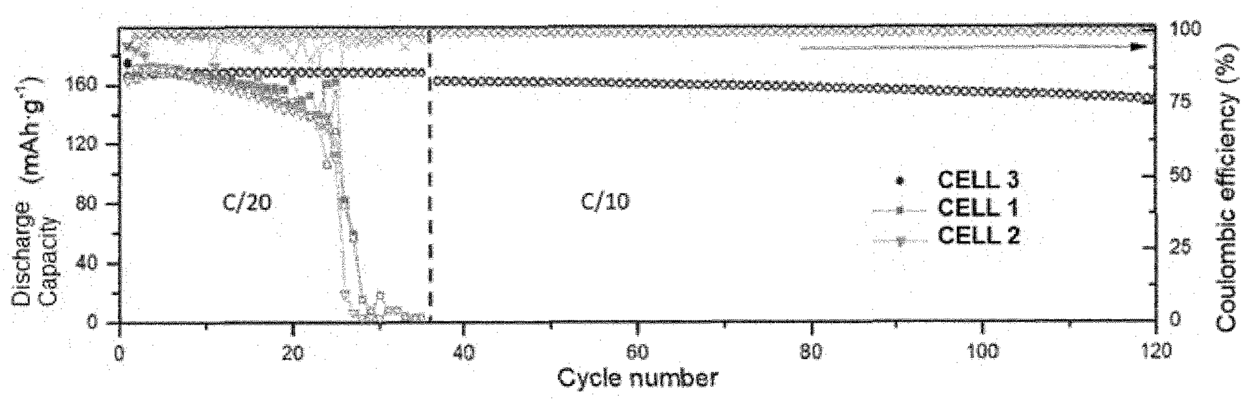


Figure 2

EP 3 930 047 A1

## Description

### FIELD OF THE INVENTION

This invention relates to the field of electrochemistry. More particularly, the invention relates to secondary solid-state electrochemical cells.

### BACKGROUND

In recent years, numerous efforts to develop all-solid state batteries (SSBs) have been made. SSBs, which employ solid-state electrolytes (SSEs), provide solutions to the primary problems encountered in traditional batteries, which employ flammable liquid electrolytes, such as poor safety or low energy density. SSBs are therefore expected to outperform current technologies, especially in the context of large-scale energy storage such as in electrical vehicle applications, where solid-state lithium batteries (SSLiBs) are of particular importance, or in grid energy storage, where solid-state Na-ion batteries (SSNaBs) are noteworthy of mention.

Amongst SSEs, solid polymer electrolytes (SPEs) have represented a particularly promising point of focus over the last decade, as said electrolytes exhibit excellent mechanical flexibility, straightforward fabrication and reinforced adhesion to electrodes. A number of SPEs, such as poly(ethylene oxide) (PEO), have been thoroughly investigated and validated as SSE components.

Despite their recognized potential, the burst of SPE-based SSBs into the market has been hindered by different issues such as anodic instability, low ionic conductivity and/or poor high-voltage stability of the SPE. For instance, PEO as SPEs is slowly oxidized at voltages over 3.9 V, thus limiting the energy density of electrochemical cells employing it as electrolyte, and with it their application scope in industry.

Dual-polymer SSEs have been reported in the art with the aim of addressing these issues and tuning the properties of the SPE at each location within the electrochemical cell at which a specific type of chemical behaviour is required. Zhou et al. (Adv. Mater. 2018, 1805574:1-7) studied the intercalation of a poly(N-methyl-malonic amide) (PMA) layer between the cathode and PEO, effectively yielding a bilayer PMA-PEO SSE.

However, such systems are not devoid of drawbacks. The present inventors have observed that the compartmentalization of different polymers within an electrochemical cell introduces regions of differing solubility for any mobile electrolyte salt which is employed in the cell, such as LiTFSI in the case of Zhou, which inevitably leads to salt diffusion gradients and ultimately to loss of capacity.

It is thus an object of the present invention to provide an electrochemical cell which overcomes the above stated drawbacks of the prior art.

### BRIEF DESCRIPTION OF THE INVENTION

In a first aspect, the present invention refers to a secondary electrochemical cell comprising:

- An anode suitable for reversibly incorporating metal cations;
- A solid-state electrolyte (SSE) comprising:
  - a metal-cation-conductive polymer;
  - a metal cation salt, wherein the salt is a single-ion conductor;
- A cathode suitable for reversibly incorporating metal cations, the cathode comprising a catholyte which comprises:
  - a metal-cation-conductive polymer;
  - a metal cation salt, wherein the salt is a single-ion conductor.

In another aspect, the invention relates to a battery comprising at least one electrochemical cell according to the first aspect of the invention.

In a further aspect, the invention relates to an electronic article, vehicle or electrical power grid comprising at least one electrochemical cell according to the first aspect of the invention.

## BRIEF DESCRIPTION OF THE DRAWINGS

Figure 1 depicts the four different electrochemical cell configurations referred to in Example 1: a) prior art; b) comparative; c) and d) according to the present invention.

Figure 2 shows the galvanostatic cycling behavior for configurations a), b) and c) of Figure 1, according to Example 2 of the present invention.

Figure 3 shows the galvanostatic cycling for configuration d) of Figure 1, according to Example 3 of the present invention.

## DETAILED DESCRIPTION OF THE INVENTION

The present invention refers to a secondary electrochemical cell comprising:

- An anode suitable for reversibly incorporating metal cations;
- A solid-state electrolyte (SSE) comprising:
  - a metal-cation-conductive polymer;
  - a metal cation salt, wherein the salt is a single-ion conductor;
- A cathode suitable for reversibly incorporating metal cations, the cathode comprising a catholyte which comprises:
  - a metal-cation-conductive polymer;
  - a metal cation salt, wherein the salt is a single-ion conductor.

The term "secondary electrochemical cell" refers to an electrochemical cell in which charging and discharging operations are reversible. The charging and the discharging of the electrochemical cell is accomplished by the reversible incorporation of metal cations at the negative electrode (anode) and positive electrode (cathode). During discharge, electrons are liberated at the anode by an oxidation process, resulting in an electron current, usually via an external load, to the cathode where the electrons are taken up by a reduction process. At the same time, charge carriers are released from the anode in the form of metal cations, which can migrate to the cathode where they are incorporated. Charge carrier migration is ensured by a metal-cation-conductive electrolyte. Conversely, during charge, the opposite reaction takes place, whereby the electrons and metal cations are released from the cathode and are incorporated at the anode.

In an embodiment, the anode is suitable for reversibly incorporating metal cations, preferably alkali metal cations, and more preferably sodium or lithium cations. In a preferred particular embodiment the metal cation is a lithium cation. In another particular embodiment the metal cation is a sodium cation. More specifically, the anode comprises an active material, which is the component of the anode enabling said reversible incorporation to take place.

The incorporation of the metal cations in the anode can occur by different mechanisms depending on the specific anode active material the anode comprises. Typical mechanisms are plating of the metal cation onto the anode, wherein the anode itself may comprise the same metal cation, such as the plating of lithium cations onto a metallic lithium anode, or wherein the anode may not comprise the same metal cation, such as the plating of lithium cations onto a copper foil; intercalation or insertion of the metal cation into the structure of the anode, such as the intercalation of lithium ions into carbonaceous materials, e.g. graphite; or reaction of the metal cation with species present in the anode, such as metals (alloying), or transition metal oxides or nitrides (conversion). The reverse processes are, respectively, stripping, deintercalation and deconversion.

In another embodiment, the anode comprises the metal cations, preferably alkali metal cations, and more preferably sodium or lithium cations. In a preferred particular embodiment the metal cation is a lithium cation. In another particular embodiment the metal cation is a sodium cation. In a particular embodiment, the anode is an anode obtainable from the incorporation of the metal cations by any of the above mentioned incorporation mechanisms.

In an embodiment, the anode is selected from a metal anode, preferably an alkali metal anode, and more preferably a sodium or lithium metal anode. In a preferred particular embodiment anode is a lithium metal anode. In

another particular embodiment the anode is a sodium metal anode.

In another embodiment the anode comprises a carbonaceous material suitable for reversibly incorporating, such as reversibly intercalating, metal cations, preferably alkali metal cations, and more preferably sodium or lithium cations. In a preferred particular embodiment the metal cation is a lithium cation. In another particular embodiment the metal cation is a sodium cation. Examples of suitable carbonaceous materials are graphite, acetylene black, carbon black, coke, glassy carbon or mixtures thereof. The skilled person knows how to select appropriate carbonaceous materials based on the specific metal cation to be incorporated in the anode. In an embodiment, the anode comprises said carbonaceous materials with the metal cations incorporated in them.

In another embodiment the anode comprises a metal oxide or metalloid oxide suitable for reversibly incorporating, such as reversibly intercalating, metal cations, preferably alkali metal cations, and more preferably sodium or lithium cations. In a preferred particular embodiment the metal cation is a lithium cation. In another particular embodiment the metal cation is a sodium cation. The metal oxide or metalloid oxide is preferably a metal oxide, even more preferably it is a titanium, vanadium or niobium oxide, and most preferably it is a titanium oxide. Examples of suitable metal oxides are $TiO_2$ (such as rutile, anatase or B forms), $Li_4Ti_5O_{12}$, $Li_2Ti_3O_7$, $Li_2Ti_6O_{13}$, $H_2Ti_3O_7$, $Nb_2O_5$, $V_2O_5$, $TiNb_2O_7$. The skilled person knows how to select appropriate metal oxides or metalloid oxides based on the specific metal cation to be incorporated in the anode. In an embodiment, the anode comprises metal or metalloid oxides with the metal cations incorporated in them.

In another embodiment the anode comprises a metal or metalloid suitable for reversibly forming an alloy with metal cations, preferably alkali metal cations, and more preferably sodium or lithium cations. In a preferred particular embodiment the metal cation is a lithium cation. In another particular embodiment the metal cation is a sodium cation. The skilled person knows how to select appropriate metals or metalloids suitable for forming the alloy. For instance, examples of metals or metalloids suitable for reversibly forming an alloy with lithium cations are Mg, Al, Zn, Bi, Cd, Sb, Ag, Si, Pb, Sn, or In which in particular can form alloys such as LiMg, LiAl, LiZn, $Li_3Bi$, $Li_3Cd$, $Li_3Sb$, $Li_4Ag$, $Li_{4.4}Si$, $Li_{4.4}Pb$ or $Li_{4.4}Sn$. In an embodiment, the anode comprises such alloys.

In another embodiment the anode comprises a transition metal- or metalloid-oxide, -sulfide, -selenide, -fluoride, -nitride or -phosphide, suitable for reversibly incorporating, such as by reversible conversion, metal cations, preferably alkali metal cations, and more preferably sodium or lithium cations. In a preferred particular embodiment the metal cation is a lithium cation. In another particular embodiment the metal cation is a sodium cation. The conversion reaction typically comprises displacement of the transition metal or metalloid by the metal cation to yield the corresponding metal-oxides, -sulfides, -selenides, -fluorides, -nitrides or -phosphides. This reaction is usually expressed according to equation (1):

$$(1)\ M_aX_b + (b \times c)C^+ + (b \times c)e^- \leftrightarrow aM + bC_cX$$

wherein M is the transition metal or metalloid; X is the -oxide, -sulfide, -selenide, - fluoride, -nitride or -phosphide anion; $C^+$ is the metal cation; and $e^-$ is an electron.

The transition metal or metalloid is preferably a transition metal, more preferably a transition metal selected from Mn, Fe, Co, Cr, Ni, Cu, Ru, Mo, W. The oxide is preferred amongst the -oxide, -sulfide, -selenide, -fluoride, -nitride and -phosphide. Examples of suitable transition metal- or metalloid-oxides, -sulfides, -selenides, - fluorides, -nitrides or -phosphides are $Fe_2O_3$, $Fe_3O_4$, CoO, $Co_3O_4$, $MoS_2$, MnSe, $MnF_2$, WN, $NiP_2$. The skilled person knows how to select appropriate transition metal or metalloid-oxides, -sulfides, -selenides, -fluorides, -nitrides or -phosphides based on the specific metal cation to be incorporated in the anode. In an embodiment, the anode comprises said transition metal- or metalloid-oxides, -sulfides, -selenides, -fluorides, - nitrides or -phosphides with the metal cations incorporated in them, i.e. the corresponding metal-oxides, -sulfides, -selenides, -fluorides, -nitrides or -phosphides.

In an embodiment, the anode comprises a mixture of the above mentioned materials suitable for reversibly incorporating metal cations.

Anodes as described herein are commercially available and well known in the art, such as from Fang et al., Adv. Energy Mater, 2020, 10, 1902485.

The secondary electrochemical cell of the invention comprises a solid-state electrolyte. The solid-state electrolyte (SSE) comprises a metal-cation-conductive polymer. Such polymers are well-known and commonly referred to as polymer electrolytes or solid polymer electrolytes (SPE) in the art, such as in Aziz et al., Journal of Science: Advanced Materials and Devices, 2018, (1):1-17. The metal-cation-conductive polymer is a polymer which comprises monomeric units capable of coordinating and decoordinating metal cations in particular stemming from the electrodes or from any salt comprised in the SSE, allowing for transport of said metal cations across the different coordinating units by a process of sequential coordination and decoordination (*aka* jump motion or hopping) under an electric field, effectively transporting said metal cations from the anode to the cathode (when discharging) or from the cathode to the anode (when charging). In such a conduction mechanism, the strength of coordination between the metal cations and the coordinating units, as well as the segmental motion of the metal-cation-conductive polymer chains comprising the coordinating units largely

determine the rate of metal cation transport across the electrolyte. Typically, the coordination/decoordination process involves Coulombic interaction between the monomeric units and the metal cation, in particular between atoms of the monomeric units with lone electron pairs, such as on O, N, S or halide atoms, and the metal cation. The metal-cation-conductive polymer is suitable for conducting metal cations.

Therefore, in an embodiment, the metal-cation-conductive polymer comprises monomeric units that are capable of coordinating and decoordinating metal cations, preferably alkali metal cations as described above, such as Li or Na cations. The monomeric units are comprised in an amount sufficient to provide transport of the metal cations from one electrode to the other under an electric field applied during operation of the electrochemical cell. What is sufficient is something the skilled person can determine based on the specifics of each case, such as the specific nature of the metal cation, the specific electrodes, SPE, or additives employed, or the operating conditions, such as operating voltage, of the electrochemical cell.

The term "monomeric unit", or "unit" (in the context of polymers), or "repeat unit", refers to the structural motif in a polymer that stems from a monomer that has been subjected to polymerisation. It is distinguished from the monomer in that it is part of the polymer, whereas a monomer is an independent molecular entity which can be polymerised into a polymer. It is commonplace in the art to refer to monomeric units according to the structure of the monomer, even though the monomeric unit itself may no longer show exactly the same structure as the monomer. Thus, for instance, "styrene monomeric unit" actually refers to a monomeric unit derived from a styrene monomer by polymerisation, even though the styrene monomeric unit no longer comprises the alkene group of styrene. The same applies to acrylate monomeric units. Similarly, ethylene oxide monomeric units do not actually comprise ethylene oxide epoxide, but refer to the unit resulting from its polymerization. The skilled person is well aware of which monomers correspond to which monomeric units. Similarly, the skilled person is well aware of how to convert monomers into corresponding monomeric units by a process of polymerization. It is understood that the monomers must be polymerizable, i.e. they must comprise a functional group which can react with other monomers in a polymerization reaction. Polymerization reactions are similarly well known by the person skilled in the art and include thermal polymerization, photopolymerisation, or solution polymerizations employing a radical initiator such as azobisisobutyronitrile, benzoyl peroxide, di-tert-butyl peroxide, lauryl peroxide, cumene hydroperoxide, t-butyl peroxypivalate, diisopropyl peroxydicarbonate, or ammonium persulfate. The term "polymer", also identified by the prefix "poly", herein refers to a molecule comprising at least 10 monomeric units, such as at least 100 or at least 1000 monomeric units. The polymer can be obtained by polymerising monomers in a linear, branched or crosslinked manner. Polymers may adopt particular structures such as comb-like, brush-like, star-like or flower-like structures, or even more complex structures. Unless otherwise indicated, poly[monomeric unit X], herein refers to a molecule comprising at least 10 X monomeric units, such as at least 100 or at least 1000 X monomeric units, wherein monomeric unit X refers to a specific monomeric unit.

In any embodiment described herein referring to a polymer comprising different monomeric units (co-polymers), the different monomers may be comprised in the polymer in an alternating, random, block or graft fashion. In particular, the polymer may be an alternating, random, block or graft copolymer of different monomeric units.

In an embodiment, the metal-cation-conductive polymer comprises monomeric units selected from alkylene oxide such as ethylene oxide or propylene oxide; alkylenimine such as ethyleneimine; alkylene sulphide such as ethylene sulphide; alkylene carbonate, such as trimethylenecarbonate, ethylenecarbonate or propylenecarbonate; acrylate, in particular alkylacrylates and alkyl esters thereof, such as methylmethacrylate; phosphazene, such as bis(2-(2-methoxyethoxy)ethoxy) phosphazene; siloxane, such as dimethyl siloxane; vinyl alcohol; vinyl acetate; vinyl halides, such as vinyl chloride or vinylidene difluoride; hexafluoropropylene; acrylonitrile; vinylpyrrolidone; ε-caprolactone; or aniline units.

The terms "alkyl" and "alkylene" refer to a linear or branched fully saturated hydrocarbon group. The term "alkylene" is preferably but not exclusively employed for non-terminal alkyl moieties, such as non-terminal alkyl moieties within a linear polymer chain, e.g. of the general formula $-(CH_2)_n-$. The alkyl or alkylene is preferably a $C_{1-12}$ alkyl or alkylene, more preferably a $C_{2-6}$ alkyl or alkylene, even more particularly a $C_{2-3}$ alkyl or alkylene.

The metal-cation-conductive polymer comprises said monomeric units capable of coordinating and decoordinating metal cation in an amount of preferably at least 40%, more preferably at least 80%, by weight with respect to the total weight of the polymer. In a preferred embodiment, the metal-cation-conductive polymer consists of said monomeric units capable of coordinating and decoordinating metal cation.

In an embodiment, the molar ratio of units capable of coordinating and decoordinating metal cation to metal cation in the SSE ranges from 5:1 to 50:1, preferably from 8:1 to 30:1, and more preferably from 15:1 to 25:1, and particularly it is 20:1. The metal cation is preferably an alkali metal cation, and more preferably a sodium or lithium cation. In a preferred particular embodiment it is a lithium cation. In another particular embodiment it is a sodium cation. In an embodiment, said ratio is the ratio of units capable of coordinating and decoordinating metal cation to anion monomeric units in the SSE.

The presence or amounts of monomeric units can be identified or calculated by different methods known to the skilled person. In an embodiment, they are determined by NMR spectroscopy, such as $^1H$-NMR spectroscopy, more particularly by $^1H$-NMR at 500 MHz, preferably at room temperature. The polymer sample is dissolved in a deuterated

solvent, such as $CDCl_3$, $D_2O$, or $(CD_3)_2SO$, and analysed by said spectroscopic technique. Suitable equipment for carrying out the reading is for example a WB 500 MHz Bruker Advance III. In the obtained spectrum, peaks characteristic to the monomeric units of interest are integrated and their ratio is established.

Optionally, copolymers of known different monomeric unit contents can be prepared in advance, a calibration can be produced, and this used to interpret the spectra obtained for samples of unknown monomeric unit content.

In a preferred embodiment, the metal-cation-conductive polymer comprises alkylene oxide monomeric units such as ethylene oxide or propylene oxide units. Preferably the alkylene oxide is ethylene oxide. The ethylene oxide (typically abbreviated as EO) monomeric unit has the formula $-(CH_2CH_2O)-$:

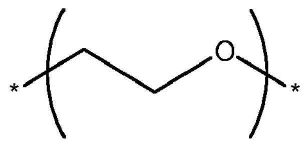

wherein the monomeric unit is shown in parentheses and * denotes a bond to the rest of the polymer. In an embodiment, the molar ratio of alkylene oxide units to Li in the SSE ranges from 5:1 to 50:1, preferably from 8:1 to 30:1, and more preferably from 15:1 to 25:1, and particularly it is 20:1.

In an embodiment, all the monomeric units in the metal-cation-conductive polymer which are capable of coordinating and decoordinating a metal cation are selected from the above listed monomeric units. In an embodiment, all the monomeric units in the metal-cation-conductive polymer are selected from the above listed monomeric units. In an embodiment, the metal-cation-conductive polymer comprises only one of the above listed monomeric units or it is a homopolymer of one of the above listed monomeric units. In any of these embodiments or any embodiment described herein, the monomeric unit is an alkylene oxide, and even more preferably it is an ethylene oxide monomeric unit.

In an embodiment, the metal-cation-conductive polymer is selected from a polyalkylene oxide such as polyethylene oxide (PEO) or polypropylene oxide (PPO); a polyalkylenimine such as polyethyleneimine (PEI); a polyalkylene sulphide such as polyethylene sulphide (PES); a polyalkylene carbonate, such as polytrimethylenecarbonate (PTMC), polyethylenecarbonate (PEC) or polypropylenecarbonate (PPC); a polyacrylate, in particular a polyalkylacrylate or an alkyl ester thereof, such as polymethylmethacrylate (PMMA); a polyphosphazene, such as poly[bis(2-(2-methoxyethoxy) ethoxy) phosphazene (MEEP); a polysiloxane, such as poly(dimethyl siloxane) (PDMS); polyvinyl alcohol (PVA); polyvinyl acetate (PVAc); polyvinyl halide, such as polyvinyl chloride (PVC) or polyvinylidene difluoride (PVdF); polyvinylidene difluoride-hexafluropropylene (PVdF-HFP); polyacrylonitrile (PAN); poly(vinylpyrrolidone) (PVP); poly(2-vinylpyridine) (P2VP); poly(ε-caprolactone) (PCL); polyaniline (PANI); chitosan (CS); or any copolymer thereof.

In an embodiment, the metal-cation-conductive polymer does not comprise alkylene carbonate monomeric units. In another embodiment, the metal-cation-conductive polymer does not comprise a poly(alkylene carbonate).

A preferred polymer is a PEO according to the following formula:

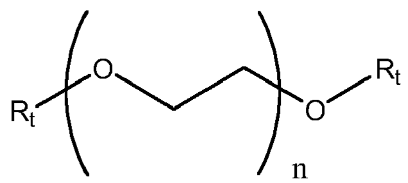

wherein n denotes the number of EO monomeric units, which may be anywhere between 10 and 220 000; and $R_t$ is H or alkyl, such as H or methyl, preferably it is H.

In an embodiment, the poly(alkylene oxide), such as poly(ethylene oxide), has a weight-average molecular weight of from 300 g/mol to 10 000 000 g/mol, preferably of from 20 000 g/mol to 10 000 000 g/mol, more preferably of from 3 000 000 g/mol to 7 000 000 g/mol, and in a particular embodiment it is of about 5 000 000 g/mol, as determined by gel permeation chromatography, such as according to ISO/DIS 13885-3(en). Such polymers are commercially available, such as from Sumitomo Seika Chemicals co.,ltd (Products PEO-1 to PEO-29) or from Sigma-Aldrich (189472; CAS 25322-68-3).

In another embodiment, a blend of metal-cation-conductive polymers as described above is used.

The term blend as used herein refers to a mixture of two or more components, in particular two or more polymers. Blends are obtainable by common methods known to the skilled person, such as mechanical blending, solution blending, or melt blending. In an embodiment, the polymer blend is obtained by solution blending, more particularly by dispersing or dissolving the polymers in a solvent, mixing, and evaporating the solvent.

Polymer blends may be miscible, when the blend exhibits a single glass transition temperature (Tg); or immiscible, when the blend exhibits the Tg of its constituent polymers.

In an embodiment, the amount of the metal-cation-conductive polymer or blend thereof in the SSE is from 10 to 82 weight % with respect to the total weight of the SSE.

The metal-cation-conductive polymer can comprise auxiliary monomeric units which are not capable of coordinating the metal cations. The incorporation of such auxiliary monomeric units can serve to fine tune the physiochemical properties of the metal-cation-conductive polymer, such as to improve the mobility of its polymer chains, which can enhance metal cation hopping from one coordination site to the next; or the mechanical strength, which can for instance minimize puncture of the metal-cation-conductive polymer by any dendrites forming at its interface with the anode. In an embodiment, the auxiliary monomeric units are selected from alkylene, such as ethylene or propylene; silane; isoprene or styrene units.

In an embodiment, when the metal-cation-conductive polymer comprises auxiliary monomeric units, these are present in an amount that does not compromise the transport of the metal cations between electrodes. In an embodiment, the amount of the auxiliary monomeric units comprised in the metal-cation-conductive polymer is of at most 50%, in particular at most 10% by weight with respect to the total weight of the metal-cation-conductive polymer.

In an embodiment, the SSE comprises, in addition to the metal-cation-conductive polymer or blend thereof, an auxiliary polymer, a plasticizer, or an inorganic filler. The incorporation of such additional components can also serve to fine tune the physiochemical properties of the SSE.

In an embodiment, the SSE comprises, in addition to the metal-cation-conductive polymer or blend thereof, an auxiliary polymer.

The auxiliary polymer can be a polymer comprising more than 60% by weight of the above described auxiliary monomeric units with respect to the total weight of the polymer. Providing the modifying properties of said auxiliary monomeric units through a separate polymer as opposed to integrating them within the metal-cation-conductive polymer can be a useful option when said integration is not simple from a synthetic point of view.

In a preferred embodiment, the auxiliary polymer is a homopolymer of one of said auxiliary monomeric units described above, such as a polyalkylene, e.g. polyethylene or polypropylene; a polysilane; polyisoprene or polystyrene. In another embodiment, the auxiliary polymer is a copolymer of two or more of said auxiliary monomeric units described above.

In an embodiment, the amount of auxiliary polymer in the SSE is from 0.1 to 30 by weight % with respect to the total weight of the SSE.

In an embodiment, the SSE comprises a plasticizer. Plasticizers can enhance the conductivity of the SSE by decreasing the glass temperature $T_g$ of the SSE, ultimately lowering the operational temperature of the electrochemical cell. Such SPEs are typically referred to as gel polymer electrolytes.

In an embodiment, the plasticizer is selected from ethylene glycols or alkyl ethers thereof. The ethylene glycol is preferably polyethylene glycol (e.g. PEG-200, PEG-400, PEG-600), tetraethylene glycol, triethylene glycol, or diglyme, more preferably it is polyethylene glycol. The polyethylene glycol preferably has a weight-average molecular weight of from 300 to 19 000 g/mol as determined by gel permeation chromatography, such as according to ISO/DIS 13885-3(en).

In an embodiment, the plasticizer is an aprotic organic solvent. The aprotic organic solvent is preferably an aprotic ether, ester or amide. Specific examples thereof include propylene carbonate, gamma-butyrolactone, butylene carbonate, ethylene carbonate, dimethyl carbonate, ethylmethyl carbonate, diethyl carbonate, 1,2-dimethoxyethane, 1,2-dimethoxypropane, 3-methyl-2-oxazolidone, tetrahydrofuran, 2-methyltetrahydrofuran, 1,3-dioxolane, 4-methyl-1,3-dioxolane, tert-butyl ether, isobutyl ether, 1,2-ethoxymethoxy ethane, dimethyl ether, methyl formate, methyl acetate, methyl propionate and 2-keto-4-(2,5,8,11-tetraoxadodecyl)-1,3-dioxolane (MC3), dialkyl phthalates such as dimethyl phthalate (DMP), diethyl phthalate (DEP), dibutyl phthalate (DBP) or di(ethyl-hexyl) phthalate (DEP), dimethylformamide (DMF). Two or more of the aprotic organic solvents may be used in combination.

In an embodiment, the plasticizer is an ionic liquid. Examples of suitable ionic liquids are 1-butyl-3-methylimidazolium-bis(trifluoromethanesulfonyl)imide (BMITFSI); 1-ethyl-3-methylimidazolium-bis(trifluoromethanesulfonyl)imide (EMITFSI); N-methyl-N-propylpiperidinium-bis(trifluoromethanesulfonyl)imide ($PP_{13}$TFSI); 1-ethyl-3-methyl imidazolium trifluoromethanesulfonate (EMITf); N-butyl-N-ethylpyrrolidinium-bis(trifluoromethanesulfonyl)imide ($Pyr_{24}$TFSI); 1-*n*-propyl-2,3-dimethylimidazolium tetrafluoroborate ($MMPIBF_4$); or 1-*n*-propyl-2,3-dimethylimidazolium hexafluorophosphate ($MMPIPF_6$).

In a preferred embodiment, the plasticizer is liquid at room temperature (22°C).

In an embodiment, the amount of the plasticizer in the SSE is from 0.1 to 30weight % with respect to the total weight of the SSE.

In another embodiment, the SSE comprises no plasticizer or comprises only traces thereof, such as 0.1% by weight or less with respect to the total weight of the SSE. In another embodiment, it further comprises no organic liquid or comprises only traces thereof, such as 0.1% by weight or less with respect to the total weight of the SSE. Such SSEs are known in the art as dry SPEs.

In an embodiment, the SSE comprises, in addition to the metal-cation-conductive polymer or blend thereof, an

inorganic filler, such as a ceramic material. Thus, the metal-cation-conductive polymer or blend thereof and the inorganic filler form a composite material.

Examples of suitable inorganic fillers are metal oxides such as $SiO_2$ , $Al_2O_3$, $TiO_2$, $LiAlO_2$, $ZrO_2$ or $Mg_2B_2O_5$; zeolites, such as $Na_nAl_nSi_{96-n}O_{192}\cdot 16H_2O$ (0<n<27); garnets, including Lis-phase lithium garnets, e.g., $Li_5La_3M^1{}_2O_{12}$, where $M^1$ is Nb, Zr, Ta, Sb, or a combination thereof; $Li_6$-phase lithium garnets, e.g. $Li_6DLa_2M^3{}_2O_{12}$, where D is Mg, Ca, Sr, Ba, or a combination thereof and $M^3$ is Nb, Ta, or a combination thereof; and $Li_7$-phase lithium garnets, e.g. $Li_7La_3Zr_2O_{12}$ and $Li_7Y_3Zr_2O_{12}$; perovskites, typically of formula $Li_{3x}La_{2/3-x}TiO_3$, such as $Li_{3.3}La_{0.56}TiO_3$; argyrodites, such as $Li_6PS_5Cl$; sulfides, such as $Li_2S$-$P_2S_5$; metal hydrides, such as $Li_2B_{12}H_{12}$, $Li_2B_{10}H_{10}$ ; metal halides, such as LiI; NASICON-structured materials, typically with the structure $Na_{1+x}Zr_2Si_xP_{3-x}O_{12}$ or equivalents where Na, Zr and/or Si are replaced by isovalent elements, such as $Na_3Zr_2(SiO_4)_2(PO_4)$; LISICON-structured materials, typically with the structure $Li_{2+2x}Zn_{1-x}GeO_4$, or equivalents where Zn and/or Ge are replaced by isovalent elements, such as $Li_{14}Zn(GeO_4)_4$; borates, such as $Li_2B_4O_7$; or metal phosphates, such as $Li_3PO_4$.

In an embodiment, the amount of inorganic filler in the SSE is from 0.1 to 50 weight % with respect to the total weight of the SSE.

In an embodiment, the SSE is compatible with the anode of choice. Being compatible herein means that the SSE is not degraded when brought into direct contact with the anode, preferably when operating (charging/discharging) the electrochemical cell. The skilled person knows how to select SSEs based on the anode chosen for the electrochemical cell.

The SSE of the invention comprises a single-ion conductor salt. Conductor salts are substances which are added to SSEs in order to ensure that an appropriate concentration of metal cations is available for charge conduction in the electrochemical cell.

The term single-ion conductor salt refers to a salt in which the anion of the salt is confined within the SSE, and preferably confined at the metal-cation-conductive polymer. Single-ion conductor salts are well known in the art, such as from Honda, Functionality of Molecular Systems Volume 2 From Molecular Systems to Molecular Devices, Springer-Verlag Tokyo 1999, Chapter 2.1.2; Hatada et al., Macromolecular design of polymeric materials, Marcel Dekker, Inc., 1997, Chapter 33. The confinement of the salt anion within the SSE or within a compartment of the SSE prevents or reduces migration of the anion to or towards other compartments of the electrochemical cell offering greater solubility for the anion, leading to the loss of salt from the SSE or compartment thereof, hence to a salt concentration gradient within the electrochemical cell, and ultimately to poor electrochemical performance.

The confinement of the salt anion can be achieved through different means, such as: i) by covalent bonding of the anion to the metal-cation-conductive polymer; ii) by including an anion polymer in the SSE; iii) by Lewis acid-base bonding of the anion - as Lewis base- to the metal-cation-conductive polymer or an additive - as Lewis acid; or iv) by grafting of the anion on the surface of any inorganic filler comprised in the SSE.

The cation of the single-ion conductor salt is a metal cation, preferably an alkali metal cation, and more preferably a sodium or lithium cation. In a preferred particular embodiment the metal cation is a lithium cation. In another particular embodiment the metal cation is a sodium cation. Preferably, it is the same metal cation as that the anode and cathode are suited to reversibly incorporate.

In an embodiment, the metal salt anion is covalently bound to the metal-cation-conductive polymer. This is typically achieved by introducing monomeric units comprising the anion into the metal-cation-conductive polymer. Thus, in an embodiment, the metal-cation-conductive polymer further comprises anion monomeric units. An anion monomeric unit refers to a monomeric unit which comprises a covalently bound anion of a metal salt.

The anion monomeric unit may or may not be a unit capable of coordinating and decoordinating metal cations, and may simply be a source of metal cation. In the latter case, the anion monomeric units comprised in the metal-cation-conductive polymer are present in an amount that does not compromise the transport of the metal cations between electrodes during charge or discharge of the electrochemical cell. In an embodiment, the amount of the anion monomeric units comprised in the metal-cation-conductive polymer is of at most 50%, in particular at most 10% by weight with respect to the total weight of the metal-cation-conductive polymer.

Examples of anion groups comprised in anion monomeric units are carboxylate; sulfonate; sulfonylimidate, such as fluorosulfonylimidate, alkylsulfonylimidate and fluoroalkylsulfonylimidate; boron-comprising anions, preferably wherein boron is the center atom of the anion, such as borates; phosphorous-comprising anions, preferably wherein phosphorous is the center atom of the anion, such as phosphates; chloride-comprising anions, preferably wherein chloride is the center atom of the anion, such as chlorates, in particular perchlorates.

Preferably, the anion group is a sulfonylimidate, such as a fluorosulfonylimidate, alkylsulfonylimidate and fluoroalkylsulfonylimidate group. The sulfonylimidate anion, also commonly referred to in the field of the invention as the sulfonylimide anion, refers to an anion presenting the -($SO_2N$-$SO_2$)- structural motif observed for instance in the electrolyte TFSI (dashed line represents bond to other atoms and not methyl groups). When the structural motif is bound to a fluorine atom, it is a fluorosulfonylimidate. When the structural motif is bound to an alkyl group, it is an alkylsulfonylimidate. When said alkyl group is partially or fully fluorinated, it is a fluoroalkylsulfonylimidate. TFSI is a fluoroalkylsulfonylimidate. As

used herein, the term sulfonylimidate embraces any of a fluorosulfonylimidate, alkylsulfonylimidate or fluoroalkylsulfonylimidate.

In a preferred embodiment, the anion group has the following formula:

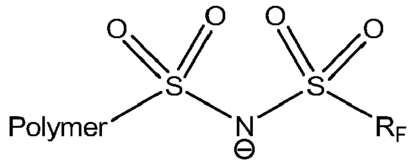

wherein Polymer represents the remainder of the polymer structure to which the anion is bound; $R_F$ is F; $C_1$-$C_{30}$, preferably $C_1$-$C_6$ alkyl group; $C_2$-$C_{30}$, preferably $C_2$-$C_6$ alkenyl group; or $C_2$-$C_{30}$, preferably $C_2$-$C_6$ alkynyl group; wherein the alkyl, alkenyl or alkynyl groups are fully or partially, preferably fully, substituted with F; wherein the alkyl, alkenyl or alkynyl groups may be branched or linear.

In a preferred embodiment, the $R_F$ group is $-CF_3$, $-CF_2CF_3$, $-CF_2CF_2CF_3$ or $-CF_2 CF_2CF_2CF_3$. More preferably, the $R_F$ group is $-CF_3$.

Examples of anion monomeric units comprising such anions are acrylate units, such as methacrylate units, wherein the acrylate is in anion form, or wherein the acrylate forms an ester with a linker group which comprises a terminal carboxylate group, e.g. with a carboxylate-terminated oligo(ethylene oxide) linker, such as in [(ω-carboxy)oligo(oxyethylene) methacrylate] units, or wherein the acrylate forms an ester with a linker group, preferably an alkyl linker, which comprises a terminal sulfonate group, such as in [sulfoalkyl methacrylate] units, or wherein the acrylate forms an ester with a linker group, preferably an alkyl linker, which comprises a sulfonylimidate terminal moiety; acrylamide units, such as methacrylamide units, wherein the amide N is bound to a terminal carboxylate group, preferably through an alkyl linker, such as in [acrylamidocaproate]; siloxane units, wherein the Si atom is bound to a terminal carboxylate group, optionally through an alkyl linker, such as in [methyl propionate siloxane] units, or wherein the Si atom is bound to a terminal sulfonate group, optionally through an alkyl linker; sulfophenylene units; styrene units wherein the phenyl ring is substituted with a sulfonate or a sulfonylimidate group; alkylenimine units, wherein the N is bound to a terminal sulfonate group, preferably through an alkyl linker; alkylene oxide borates or phosphates, alkylene borates or phosphates, or fluoroalkyleneborates.

The prefix "oligo" denotes an oligomer, which herein refers to a molecule comprising from 3 to 9 monomeric units and which is preferably linear.

In a preferred embodiment, the anionic monomeric unit is a styrene monomeric unit wherein the phenyl ring is substituted with a sulfonylimidate group. More preferably, the anionic monomeric unit is a monomeric unit of formula:

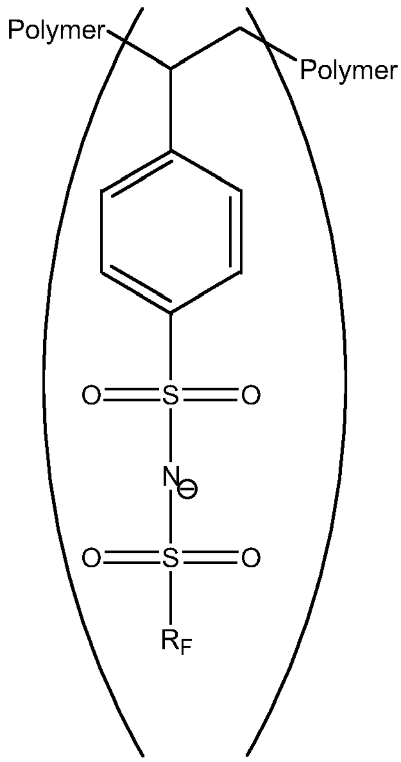

wherein Polymer represents the remainder of the polymer structure to which the anionic monomeric unit is bound; the actual monomeric unit is shown in brackets; and $R_F$ has the meaning described further above.

In particular, Polymer represents the remainder of the polymer structure, which may be any residue obtainable from the initiation or termination of the polymerization employed to synthesise the polymer (if a homopolymer), aka polymer end-groups; or such residue and/or another monomeric unit (if polymer is a copolymer).

The metal-cation-conductive polymer comprising anion monomeric units can be obtained mainly in two manners: either by co-polymerizing the anion monomeric units with the monomeric units capable of coordinating and decoordinating metal cations; or by copolymerizing precursor monomeric units with the monomeric units capable of coordinating and decoordinating metal cations, and then covalently attaching the metal salt anion to the precursor monomeric units after the polymerization reaction is completed. A precursor monomeric unit is a unit which can be chemically transformed into an anion monomeric unit. Standard polymerization techniques known to the skilled person may be employed, such as conventional radical polymerization, controlled radical polymerization (e.g., atom transfer radical polymerization (ATRP) and reversible addition-fragmentation chain transfer (RAFT)), or anionic block copolymerization, or combinations thereof. Examples of such procedures are reported in J. Rolland, et al., Polymer, 2015, 68, 344-352; C. Jangu, et al., Macromolecules, 2015, 48, 4520-4528; S.-W. Ryu, et al., J. Electrochem. Soc., 2005, 152, A158-A163; D. R. Sadoway, et al., J. Power Sources, 2001, 97-98, 621-623; H. Han, *et al.*, 2010, 39, 472-474; H. Han, et al., J. Power Sources, 2011, 196, 3623-3632, H. Han, et al., Electrochem. Commun., 2011, 13, 265-268; H. Zhang, et al., J. Power Sources, 2015, 296, 142-149; H. Zhang, et al., J. Fluorine Chem., 2015, 174, 49-61.

An example of a precursor anion monomeric unit is the acrylate unit; the acrylate or acrylic acid moiety can undergo esterification by common general knowledge chemistry, such as by alkylation of the acrylate with an alkylhalide comprising the anion, or by condensation of the acrylic acid with an alkanol (alkyl alcohol) linker comprising the anion. Another example of a precursor anion monomeric unit is the styrene unit wherein the phenyl ring is substituted with a sulfonylchloride group, wherein the latter can react with sulfonylamides under basic conditions to yield the corresponding sulfonylimidate styrene unit.

In another embodiment, the anion monomeric units are not comprised in the metal-cation-conductive polymer, but form part of an anion polymer. An anion polymer refers to a polymer comprising anion monomeric units as described above, wherein the polymer need not be able to coordinate and decoordinate metal cations or to coordinate and decoordinate metal cations to an extent that ensures the transport of the metal cations between electrodes during charge or discharge of the electrochemical cell. The purpose of the anion polymers is to provide a source of metal cation. Thus, in a preferred embodiment, the SSE of the invention comprises a blend of a metal-cation-conductive polymer and an anion polymer.

In an embodiment, the anion polymer is a polymer comprising anion monomeric units as described above in

an amount of more than 60% with respect to the total weight of the anion polymer.

In a preferred embodiment, the anion polymer comprises styrene monomeric units wherein the phenyl ring is substituted with a sulfonylimidate group. Preferably, all the anion monomeric units in the anion polymer are such styrene monomeric units. Preferably, the anion polymer is a homopolymer of such styrene monomeric units. Preferably the anion polymer comprises between 50 and 3000 of such anion monomeric units, such as in alternating, random, block or graft fashion. Preferably, it is a poly (sulfonylimidate styrene) anion polymer of formula:

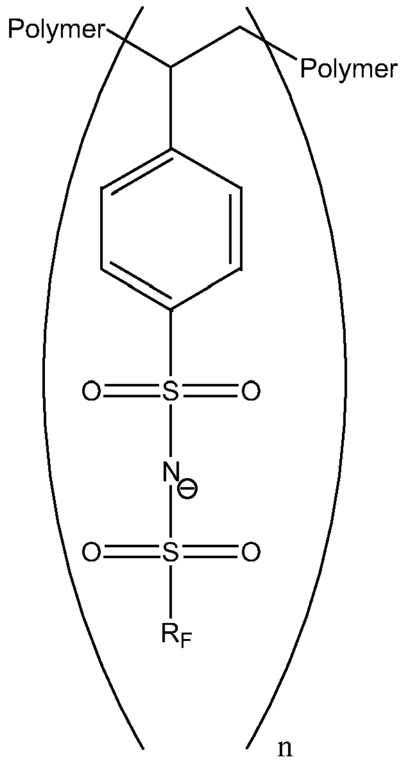

wherein n ranges from 50 to 3000; the structure of the sulfonylimidate styrene monomeric unit is shown in brackets; and Polymer and $R_F$ have the meanings described above.

In an embodiment, the amount of anion polymer in the SSE is from 4 to 50% weight % with respect to the total weight of the SSE.

Such polymers may be commercially obtained or prepared by methods known to the skilled person such as that described in R. Meziane, et al., Electrochim. Acta, 2011, 57, 14-19.

In an embodiment, the metal salt anion is not covalently bound to the metal-cation-conductive polymer, but is immobilised at the metal-cation-conductive polymer by Lewis acid-base bonding, typically by H-bonding, in particular between the anion of a dual-ion conductor salt as Lewis base and Lewis acid groups comprised in the metal-cation-conductive polymer. The Lewis acid groups are introduced exactly in the same manner as mentioned above for the anion monomeric units, i.e. either by introducing monomeric units comprising the Lewis acid group into the metal-cation-conductive polymer, or by blending the metal-cation-conductive polymer with a Lewis acid polymer. Embodiments disclosed for the anion monomeric units or anion polymer apply respectively to the Lewis acid monomeric units or Lewis acid polymer. Thus, in an embodiment, the metal-cation-conductive polymer further comprises Lewis acid monomeric units. A Lewis acid monomeric unit refers to a monomeric unit which comprises a Lewis acid group capable of immobilising a metal salt anion by Lewis acid-base bonding.

The Lewis acid monomeric units comprised in the metal-cation-conductive polymer are present in an amount that does not compromise the transport of the metal cations between electrodes during charge or discharge of the electrochemical cell. In an embodiment, the amount of Lewis acid monomeric units comprised in the metal-cation-conductive polymer is of at most 50%, in particular at most 10% by weight with respect to the total weight of the metal-cation-conductive polymer.

Examples of Lewis acid groups that are capable of immobilising anions by Lewis acid-base bonding are neutral boron oxides esters, boroxines and boronate esters; and examples of monomeric units which can be bound to such Lewis acid groups are alkyleneoxide units.

Such polymers or polymer blends can be prepared by methods known to the skilled person, such as those

reported in M. Anne Mehta, et al., Electrochim. Acta, 2000, 45, 1175-1180; M. A. Mehta, et al., J. Power Sources, 1999.

In yet another embodiment, the SSE comprises a Lewis acid additive at which the anion of a dual-ion conductor metal salt is immobilised by Lewis acid-base bonding, in particular between the anion as Lewis base and Lewis acid groups comprised in the Lewis acid additive.

The additive is typically a macromolecule which immobilises the anion by H-bonding, the macromolecule comprising the H-bond donor and the anion comprising the H-bond acceptor. The term "macromolecule" refers to any structure with repeating H-bond donor groups and having a molecular weight of at least 100 g/mol, preferably of at least 300 g/mol. By virtue of its size, the macromolecule itself cannot migrate to other compartments of the electrochemical cell that are not the SSE, and hence, any anion immobilised at the macromolecule will also not be able to migrate.

Examples of additives capable of immobilising metal salt anions are calixarene or calix heterocycles, such as calix[4]arene or calix[6]pyrrole.

Examples of anions that can be immobilised with such additives are the triflate anion or the tetrafluoroborate anion.

Such complexes can be prepared by methods known to the skilled person, such as those reported in A. Blazejczyk, et al., J. Electrochem. Soc., 2004, 151, A1762-A1766 M. Kalita, et al., Electrochim. Acta, 2005, 50, 3942-3948.

In yet another embodiment, when the SSE comprises an inorganic filler, the surface of the inorganic filler particles may comprise the metal salt grafted thereon. In particular, it is the anion of the salt which is grafted on the surface of the inorganic particles. The anion may be directly grafted on the surface of the particles, or grafted thereon through a linker such as an arylalkyl, oligo(alkylene oxide) or alkyl linker. The term aryl refers to a $C_{6-14}$ aromatic hydrocarbon ring, which may be mono- or polycyclic, such as phenyl or naphthyl. Examples of inorganic filler particles suitable for such grafting are $SiO_2$ or $Al_2O_3$ particles. Preferably, the particles of the inorganic filler on which the salt is grafted are nanoparticles, such as particles the greatest diameter of which ranges from 5 nm to 50 000 nm.

Such inorganic-organic complexes can be prepared by methods known to the skilled person, such as those reported in H. Zhao, et al., ACS Appl. Mater. Interfaces, 2015, 7, 19335-19341; H. Zhao, et al., ACS Appl. Mater. Interfaces, 2015, 7, 19494-19499.

In any embodiment described herein, the metal cation salt comprises an anion group selected from carboxylates; sulfonates; sulfonylimidates, such as fluorosulfonylimidates, alkylsulfonylimidates or fluoroalkylsulfonylimidates; boron-comprising anions, preferably wherein boron is the center atom of the anion, such as borates; phosphorous-comprising anions, preferably wherein phosphorous is the center atom of the anion, such as phosphates; chloride-comprising anions, preferably wherein chloride is the center atom of the anion, such as chlorates, in particular perchlorates. Preferably, the anion group is a sulfonylimidate, such as a fluorosulfonylimidate, alkylsulfonylimidate or fluoroalkylsulfonylimidate.

The cathode of the electrochemical cell of the present invention comprises a second solid state electrolyte, herein referred to as the catholyte. All embodiments described hereinabove for the SSE are equally applicable to the catholyte. In particular, the catholyte comprises a single-ion conductor salt as described in any of the embodiments described above when referring to the SSE. In an embodiment, the SSE metal-cation-conductive polymer and the catholyte metal-cation-conductive polymer comprise the same single-ion conductor salt. In another embodiment, the SSE metal-cation-conductive polymer and the catholyte metal-cation-conductive polymer comprise a different single-ion conductor salt.

In an embodiment, the following monomeric units can also be included for the catholyte metal-cation-conductive polymer in addition to the same monomeric units as described for the SSE metal-cation-conductive polymer: pyrrole, N-methyl-malonic amide, and 3,4-ethylenedioxy-thiophene monomeric units. Similarly, polymers thereof are also herein included.

In a particular embodiment, the catholyte metal-cation-conductive polymer or any blend thereof does not comprise alkyleneoxide monomeric units. In particular embodiments, the catholyte metal-cation-conductive polymer or any blend thereof comprises less than 80%, 50%, 20%, 10% or 5% by weight alkyleneoxide monomeric units with respect to the total weight of the polymer or polymer blend. Preferably the alkyleneoxide monomeric units are ethyleneoxide monomeric units.

In an embodiment, the molar ratio of units capable of coordinating and decoordinating metal cation to metal cation in the catholyte ranges from 1:1 to 40:1, preferably from 5:1 to 30:1, and more preferably from 10:1 to 20:1, and particularly it is 11:1. The metal cation is preferably an alkali metal cation, and more preferably a sodium or lithium cation. In a preferred particular embodiment it is a lithium cation. In another particular embodiment it is a sodium cation. In an embodiment, said ratio is the ratio of units capable of coordinating and decoordinating metal cation to anion monomeric units in the catholyte.

In an embodiment, the weight of the catholyte is between 5 and 60, preferably between 10 and 25 weight%, with respect to the total weight of the cathode.

In an embodiment, one of the SSE metal-cation-conductive polymer or the catholyte metal-cation-conductive polymer comprises a monomeric unit not comprised in the other of SSE metal-cation-conductive polymer or the catholyte metal-cation-conductive polymer.

In an embodiment, none of the monomeric units comprised in one of the SSE metal-cation-conductive polymer or the catholyte metal-cation-conductive polymer are comprised in the other of the SSE metal-cation-conductive polymer or the catholyte metal-cation-conductive polymer. In an embodiment, none of the monomeric units - other than any one of auxiliary monomeric units, anion monomeric units, Lewis acid monomeric units or any combination thereof - comprised in one of the SSE metal-cation-conductive polymer or the catholyte metal-cation-conductive polymer are comprised in the other of the SSE metal-cation-conductive polymer or the catholyte metal-cation-conductive polymer. In other words, none of the monomeric units capable of coordinating and decoordinating metal cations comprised in one of the SSE metal-cation-conductive polymer or the catholyte metal-cation-conductive polymer are comprised in the other of the SSE metal-cation-conductive polymer or the catholyte metal-cation-conductive polymer.

In another embodiment, the SSE - comprising no single-ion conductor salt - solubilises a dual-ion conducting salt, such as LiTFSI, to a different extent when compared to the extent to which the catholyte - comprising no single-ion conductor salt -solubilises the same dual-ion conducting salt, should said dual-ion conducting salt be solubilised in said SSE and catholyte under identical conditions, such as at room temperature (22°C) and for the same amount of time. In an embodiment, a different extent means that the solubility of the dual-ion conducting salt in one of these two cell components represents 90% or less of the solubility of the dual-ion conducting salt in the other of these two cell components.

In another embodiment, the SSE metal-cation-conductive polymer is a polymer that would solubilise a dual-ion conducting salt, such as LiTFSI, to a different extent when compared to the extent to which the catholyte metal-cation-conductive polymer would solubilise the same dual-ion conducting salt, should said dual-ion conducting salt be solubilised in said polymers under identical conditions, such as at room temperature (22°C) and for the same amount of time. In an embodiment, a different extent means that the solubility of the dual-ion conducting salt in one of these two polymers represents 90% or less of the solubility of the dual-ion conducting salt in the other of these two polymers.

In another embodiment, when at least one of the SSE and the catholyte comprises a blend of metal-cation-conductive polymers or a blend of one or more metal-cation-conductive polymers with one or more auxiliary polymer and/or with one or more anion polymers and/or with one or more Lewis acid polymers, the SSE or catholyte polymer blend is a blend that would solubilise a dual-ion conducting salt, such as LiTFSI, to a different extent when compared to the extent to which the metal-cation-conductive polymer or a polymer blend thereof as described above of the other of the SSE or catholyte would solubilise the same dual-ion conducting salt, should said dual-ion conducting salt be solubilised in said polymers or polymer blends under identical conditions, such as at room temperature (22°C), for the same amount of time. In an embodiment, a different extent means that the solubility of the dual-ion conducting salt in one of these two polymers or polymer blends represents 90% or less of the solubility of the dual-ion conducting salt in the other polymer or polymer blend.

The cathode of the electrochemical cell of the present invention is suitable for reversibly incorporating metal cations, preferably alkali metal cations, and more preferably sodium or lithium cations. In a preferred particular embodiment the metal cation is a lithium cation. In another particular embodiment the metal cation is a sodium cation. More specifically, the cathode comprises an active material, which is the component of the cathode enabling said reversible incorporation to take place.

In an embodiment, the cathode comprises between 30 and 90%, particularly between 70 and 80%, by weight, of active material with respect to the total weight of the cathode.

Although the incorporation of the metal cations in the cathode can occur by different mechanisms, the grand majority of known cathodes, especially those on the market employ intercalation/deintercalation.

In another embodiment, the cathode comprises the metal cations, preferably alkali metal cations, and more preferably sodium or lithium cations. In a preferred particular embodiment the metal cation is a lithium cation. In another particular embodiment the metal cation is a sodium cation. In a particular embodiment, the cathode is a cathode obtainable from the intercalation of the metal cations in its structure, in particular at its active site.

In an embodiment, the cathode comprises an active material selected from one of the following:

- a lithium nickel-rich layered oxide of formula $Li_yNi_{1-x}M_xO_2$, wherein M represents at least one metal and $0 \leq x \leq 1$, $0.8 \leq y \leq 1.2$;
- a spinel oxide of formula $LiNi_{2-x}M_xO_4$, wherein M represents at least one transition metal and $0 \leq x \leq 2$;
- a lithium-rich layered oxide of formula $Li_{1+x}M_{1-x}O_2$ wherein M represents at least one transition metal and $0 \leq x \leq 1$;
- a lithium polyanion of formula $Li_2MSiO_4$ wherein M is Mn, Co or Ni; of formula $LiMPO_4$ wherein M is Co or Ni; of formula $Li_2MP_2O_7$ wherein M is Mn, Co or Ni; or of formula $Li_3V_2(PO_4)_3$, $Li_2VOP_2O_7$, or $L_1VP_2O_7$; and
- a phosphate or sulfate of formula $Li_yMXO_4Z$; wherein y = 0, 1, 2; M = transition metal; X = P, S; Z = F, O, OH.

In a preferred embodiment, the cathode active material is a lithium nickel-rich layered oxide of formula $Li_yNi_{i-x}M_xO_2$, wherein M represents at least one metal and $0 \leq x \leq 1$, $0.8 \leq y \leq 1.2$. Preferably, M represents at least one of Fe, Co, Mn, Cu, Zn, Al, Sn, B, Ga, Cr, V, Ti, Mg, Ca, and Sr, more preferably it represents at least one of Co, Mn,

and Al, and most preferably it represents Co and Mn. Preferably, x is in the range from 0.01 to 0.5. Examples of suitable active materials, which can be eventually surface treated and/or slightly overlithiated are $LiNi_{1/3}Co_{1/3}Mn_{1/3}O_2$, $LiNi_{0.5}Co_{0.2}Mn_{0.3}O_2$ $LiNi_{0.4}Co_{0.2}Mn_{0.4}O_2$, $LiNi_{0.8}Co_{0.15}Al_{0.05}O_2$, $LiNi_{0.8}Co_{0.1}Mn_{0.1}O_2$, $LiNi_{0.85}Co_{0.05}Mn_{0.1}O_2$, $LiNi_{0.84}Co_{0.06}Mn_{0.09}Al_{0.01}O_2$, $LiNi_{0.85}Mg_{0.15}O_2$.

In an embodiment, the cathode active material is a spinel oxide of formula $LiNi_{2-x}M_xO_4$, wherein M represents at least one transition metal and $0 \leq x \leq 2$. Preferably, M represents at least one of Mn and Ti, Examples of suitable active materials are $LiNi_{0.5}Mn_{1.5}O_4$, $LiNi_{0.5}Mn_{1.2}Ti_{0.3}O_4$, preferably $LiNi_{0.5}Mn_{1.5}O_4$.

In an embodiment, the cathode active material is a lithium-rich layered oxide of formula $Li_{1+x}M_{1-x}O_2$ wherein M represents at least one transition metal and $0 \leq x \leq 1$. M preferably represents at least one of Mn, Ni and Co. Preferably, the lithium-rich layered oxide is represented by formula $xLi_2MnO_3 \cdot (1-x)LiMO_2$ wherein M represents at least one metal and $0 \leq x \leq 1$. Examples of suitable active materials are $Li_{1.2}Mn_{0.54}Ni_{0.13}Co_{0.13}O_2$, $Li_{1.2}Mn_{0.6}Ni_{0.2}O_2$, which can also be expressed as 0.5 $Li_2MnO_3$ · 0.5 $LiNi_{1/3}Co_{1/3}Mn_{1/3}O_2$ and 0.5 $Li_2MnO_3$ · 0.5 $LiNi_{0.5}Mn_{0.5}O_2$, respectively; $Li_{1.2}Co_{0.4}Mn_{0.4}O_2$, $Li_{1.3}Nb_{0.3}Mn_{0.4}O_2$.

In an embodiment, the cathode active material is a lithium polyanion of formula $Li_2MSiO_4$ wherein M is Mn, Co or Ni; of formula $LiMPO_4$ wherein M is Fe, Mn, Co or Ni; of formula $Li_2MP_2O_7$ wherein M is Mn, Co or Ni; or of formula $Li_3V_2(PO_4)_3$, $Li_2VOP_2O_7$, or $L_1VP_2O_7$.

In an embodiment, the cathode active material is a phosphate or sulfate of formula $Li_yMXO_4Z$; wherein y = 0, 1, 2; M = transition metal; X = P, S; Z = F, O, OH. M preferably represents one of Co, Ni, Mn, V, Fe. Preferably, the material has a tavorite structure.

In an embodiment, the cathode is a homologue of the above defined cathodes wherein the Li is replaced by Na.

Cathodes as described herein are commercially available and well known in the art, such as from Li et al., Chem Soc Rev, 2017, 46, 3006-3059, or Lyu et al., Sustainable Materials and Technologies, 2019, 21, e00098.

The cathodes of the present invention may further comprise a conductive carbon material such as carbon black or activated carbon. Preferably, the conductive carbon material is carbon black. The term "carbon black" [C.A.S. NO. 1333-86-4] refers to colloidal aciniform carbon particles produced by the incomplete combustion or thermal decomposition of gaseous or liquid hydrocarbons such as heavy petroleum distillates and residual oils, coal-tar products, natural gas or acetylene. Its physical appearance is that of a black, finely divided pellet or powder. Carbon black is chemically and physically distinct from soot and black carbon, as it contains greater than 90%, preferably greater than 97%, elemental carbon. Well-known types of carbon black include acetylene black, channel black, furnace black, lamp black and thermal black.

In an embodiment, the amount of conductive carbon material present in the cathode is between 1 and 30%, such as between 1 and 15% particularly between 5 and 10%, by weight with respect to the total weight of the cathode.

In a preferred embodiment, the cathode of the present invention is suitable for high voltage operation, in particular it is suitable for operation at voltages of 4.0 or greater, such as at voltages of from 4.0 to 5.5V, or of from 4.0 to 5.0V, or of from 4.0 to 4.5V, or most particularly of from 4.0 to 4.2V. In the context of the present invention, a cathode is "suitable for high voltage operation" if an electrochemical cell comprising said cathode is capable of achieving a discharge capacity retention of at least 60% at discharge cycle 100 with respect to discharge cycle 1 after subjecting the cell to 100 charge/discharge cycles cycled up to 4.0 V or greater vs $Li/Li^+$ at a C rate of C/20 and temperature of 70 °C. In a particular embodiment, the cell cycling is up to 4.2 V vs $Li/Li^+$.

In a more particular embodiment, the cathode is "suitable for high voltage operation" if a Li metal electrochemical cell according to Example 3 below, wherein the NMC active material and the PPC catholyte of the cathode are respectively replaced for another cathode active material and another catholyte, is capable of achieving a discharge capacity retention of 60% at discharge cycle 100 with respect to discharge cycle 1 after subjecting the cell to 100 charge/discharge cycles cycled up to 4.0 V or greater vs $Li/Li^+$ at a C rate of C/20 and temperature of 70 °C. In a particular embodiment, the cell cycling is up to 4.2 V vs $Li/Li^+$.

Similarly, a catholyte is "suitable for high voltage operation" if an electrochemical cell comprising said catholyte is capable of achieving a discharge capacity retention of at least 60% at discharge cycle 100 with respect to discharge cycle 1 after subjecting the cell to 100 charge/discharge cycles cycled up to 4.0 V or greater vs $Li/Li^+$ at a C rate of C/20 and temperature of 70 °C. In a particular embodiment, the cell cycling is up to 4.2 V vs $Li/Li^+$.

Similarly, the catholyte is "suitable for high voltage operation" if a Li metal electrochemical cell according to Example 3 below, wherein the PPC of the cathode is replaced for the catholyte, is capable of achieving a discharge capacity retention of 60% at discharge cycle 100 with respect to discharge cycle 1 after subjecting the cell to 100 charge/discharge cycles cycled up to 4.0 V or greater vs $Li/Li^+$ at a C rate of C/20 and temperature of 70 °C. In a particular embodiment, the cell cycling is up to 4.2 V vs $Li/Li^+$.

In an embodiment, the metal-cation-conductive polymer comprised in the catholyte comprises monomeric units selected from alkylene carbonate, such as trimethylenecarbonate, ethylenecarbonate or propylenecarbonate; pyrrole; aniline; N-methyl-malonic amide; 3,4-ethylenedioxy-thiophene; or ε-caprolactone monomeric units, or mixtures thereof. The metal-cation-conductive polymer comprises said monomeric units in an amount of preferably at least 40%, more

preferably at least 80%, by weight with respect to the total weight of the polymer.

In an embodiment, all the monomeric units in the metal-cation-conductive polymer which are capable of coordinating and decoordinating a metal cation are selected from the above listed monomeric units. In an embodiment, all the monomeric units in the metal-cation-conductive polymer are selected from the above listed monomeric units. In an embodiment, the metal-cation-conductive polymer comprises only one of the above listed monomeric units or it is a homopolymer of one of the above listed monomeric units.

In another embodiment, the metal-cation-conductive polymer comprised in the catholyte is a homopolymer of one of these monomeric units or a co-polymer of two or more of these monomeric units.

In a preferred embodiment, the metal-cation-conductive polymer comprised in the catholyte comprises alkylene carbonate monomeric units. The term alkylene carbonate refers to a structural moiety comprising a carbonate functional group bound to an alkylene group. Preferably, the metal-cation-conductive polymer comprises at least 60%, at least 75% or at least 90% by weight alkylene carbonate monomeric units with respect to the total weight of the polymer, or it is an alkylene carbonate homopolymer.

In an embodiment, the molar ratio of alkylene carbonate units to Li in the catholyte ranges from 1:1 to 40:1, preferably from 5:1 to 30:1, and more preferably from 10:1 to 20:1, and particularly it is 11:1.

The alkylene carbonate is preferably ethylenecarbonate or propylenecarbonate, most preferably it is propylenecarbonate. In particular, the propylenecarbonate monomeric unit has the formula:

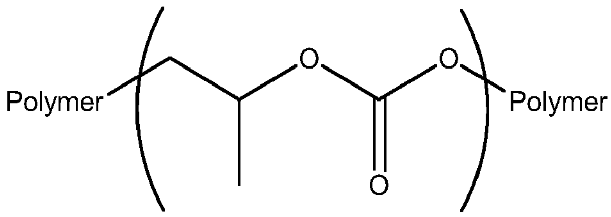

wherein Polymer represents the remainder of the polymer structure to which the propylenecarbonate monomeric unit is bound; and the actual propylenecarbonate monomeric unit is shown in brackets.

More preferably, the metal-cation-conductive polymer comprised in the catholyte is poly(propylenecarbonate).

In an embodiment, the poly(alkylenecarbonate), such as poly(propylenecarbonate), has a weight-average molecular weight of from 300 g/mol to 300 000 g/mol, more preferably of from 10 000 g/mol to 100 000 g/mol, even more preferably of from 30 000 g/mol to 70 000 g/mol, and in a particular embodiment it is of about 50 000 g/mol, as determined by gel permeation chromatography, such as according to ISO/DIS 13885-3(en). Such polymers are commercially available, such as from Sigma Adrich (Ref. # 389021).

In an embodiment, the metal-cation-conductive polymer comprised in the catholyte comprises two or more different alkylene carbonate monomeric units, and more particularly it is a copolymer of two or more different alkylene carbonate monomeric units. In a particular embodiment, the two or more different alkylene carbonate monomeric units are trimethylenecarbonate monomeric units and one or more other alkylene carbonate monomeric units. The one or more other alkylene carbonate monomeric units are preferably ethylenecarbonate and/or propylenecarbonate monomeric units, most preferably they are propylenecarbonate monomeric units.

In an embodiment, the catholyte does not comprise PEO.

In a preferred embodiment, the catholyte comprises a blend of:

- a metal-cation-conductive polymer which comprises alkylene carbonate monomeric units, and preferably the metal-cation-conductive polymer is poly(propylenecarbonate); and
- an anion polymer comprising styrene monomeric units wherein the phenyl ring is substituted with a sulfonylimidate group as described in any of the above embodiments, and preferably the anion polymer is a poly(sulfonylimidate styrene) of the above depicted formula.

In a preferred embodiment, the SSE comprises a blend of:

- a metal-cation-conductive polymer comprising alkylene oxide monomeric units as described in any of the above embodiments, and preferably the metal-cation-conductive polymer is PEO; and
- an anion polymer comprising styrene monomeric units wherein the phenyl ring is substituted with a sulfonylimidate group as described in any of the above embodiments, and preferably the anion polymer is a poly(sulfonylimidate styrene) of the above depicted formula.

In a preferred particular embodiment,

- the SSE comprises a blend of:

  - a metal-cation-conductive polymer comprising alkylene oxide monomeric units as described in any of the above embodiments, and preferably the metal-cation-conductive polymer is PEO; and
  - an anion polymer comprising styrene monomeric units wherein the phenyl ring is substituted with a sulfonylimidate group as described in any of the above embodiments, and preferably the anion polymer is a poly(sulfonylimidate styrene) of the above depicted formula; and

- the catholyte comprises a blend of:

  - a metal-cation-conductive polymer which comprises alkylene carbonate monomeric units, and preferably the metal-cation-conductive polymer is poly(propylenecarbonate); and
  - an anion polymer comprising styrene monomeric units wherein the phenyl ring is substituted with a sulfonylimidate group as described in any of the above embodiments, and preferably the anion polymer is a poly(sulfonylimidate styrene) of the above depicted formula.

Preferably, these blends are obtained by solution blending. Preferred solvents for such blending are water or a mixture of water and acetonitrile. The water is preferably deionised water.

Similarly, a cathode active material is "suitable for high voltage operation" if an electrochemical cell comprising said cathode is capable of achieving a discharge capacity retention of at least 60% at discharge cycle 100 with respect to discharge cycle 1 after subjecting the cell to 100 charge/discharge cycles cycled up to 4.0 V or greater vs $Li/Li^+$ at a C rate of C/20 and temperature of 70 °C. In a particular embodiment, the cell cycling is up to 4.2 V vs $Li/Li^+$.

Similarly, the cathode active material is "suitable for high voltage operation" if a Li metal electrochemical cell according to Example 3 below, wherein the NMC of the cathode is replaced for the cathode active material, is capable of achieving a discharge capacity retention of 60% at discharge cycle 100 with respect to discharge cycle 1 after subjecting the cell to 100 charge/discharge cycles cycled up to 4.0 V or greater vs $Li/Li^+$ at a C rate of C/20 and temperature of 70 °C. In a particular embodiment, the cell cycling is up to 4.2 V vs $Li/Li^+$.

In a preferred embodiment, the cathode active material is "suitable for high voltage operation" if the cathode active material further preserves its crystal structure throughout the 100 cycles, as determined by X-ray powder diffraction, in particular by comparing an X-ray powder diffraction pattern of the active material after discharge cycle 1 and an X-ray powder diffraction pattern of the active material after discharge cycle 100, wherein the X-ray diffraction patterns are obtained in the same manner.

In an embodiment, the cathode active material and catholyte form an admixture. An admixture of different materials refers to the product obtained from a step of mixing said different materials, such as mixing by hand or mechanical mixing. Simply bringing the different materials into contact, such as by depositing one on the other, without the aim of increasing the homogeneity of the combination formed by the different materials, is not considered mixing. In an embodiment, any other material comprised in the cathode, such as the conductive carbon also forms part of the admixture.

In an alternative embodiment, the cathode comprises a catholyte layer which separates the SSE from the remainder of the cathode. "Catholyte layer" refers to a layer comprising at least 60% by weight catholyte, in particular consisting of catholyte. Preferably, the catholyte layer comprises no active material, or comprises at most 5% by weight of the active material comprised in the cathode. The remainder of the cathode may or may not comprise catholyte. In an embodiment, the cathode active material and catholyte form an admixture in the remainder of the cathode. In an embodiment, any other material comprised in the cathode, such as the conductive carbon also forms part of the admixture in the remainder of the cathode.

In an embodiment, in any of the embodiments disclosed herein, the electrochemical cell presents a layered configuration. More particularly, the electrochemical cell comprises:

- an anode layer, which presents a surface that contacts a SSE layer;
- a cathode layer, which presents a surface that contacts the SSE layer;
- the SSE layer, which presents a first surface that contacts the anode layer, and a second surface that contacts the cathode layer,

such as shown at Figure 1.

In an embodiment, the cathode active material and catholyte form an admixture in the cathode layer. In an embodiment, any other material comprised in the cathode, such as the conductive carbon, also forms part of the admixture.

In an alternative embodiment, the cathode layer comprises a catholyte sub-layer which comprises the cathode surface contacting the SSE layer, and thus separates the SSE layer from the remainder of the cathode layer. "Catholyte

layer" refers to a layer comprising at least 60% by weight catholyte, in particular consisting of catholyte. Preferably, the catholyte layer comprises no active material, or comprises at most 5% by weight of the active material comprised in the cathode. The remainder of the cathode may or may not comprise catholyte. In an embodiment, the cathode active material and catholyte form an admixture in the remainder of the cathode. In an embodiment, any other material comprised in the cathode, such as the conductive carbon also forms part of the admixture in the remainder of the cathode.

As used herein, the term "layer", "film" or "sheet" refers to a three dimensional structure having two dimensions that are substantially greater, such as at least two-fold greater, or ten-fold greater, than the third dimension. Preferably, said structure covers at least 20%, at least 50% or at least 80% of the surface on which it is disposed.

Layers may adopt a geometry suitable for use in electrochemical cells or batteries of different shapes, such as for example button-shaped (i.e. substantially flat and round or oval surface), rectangular, cylindrical or prismatic geometries, or a geometry suitable for a pouch cell design.

Methods for forming layers or depositing layers on surfaces are well known to the person skilled in the art and include spray coating, spin coating, screen printing, dip coating or inkjet printing.

In a preferred embodiment, the electrochemical cell of the present invention is a Na or Li metal or a Na- or Li-ion electrochemical cell. In other words, the electrochemical cell is a secondary electrochemical cell comprising:

- An anode suitable for reversibly incorporating Na or Li cations, respectively;
- A solid-state electrolyte (SSE) comprising:
  - a Na-cation-conductive polymer or a Li-cation-conductive polymer, respectively;
  - a salt of Na or Li, respectively, wherein the salt is a single-ion conductor;
- A cathode suitable for reversibly incorporating Na or Li cations, respectively, comprising a catholyte which comprises:
  - a Na-cation-conductive polymer or a Li-cation-conductive polymer, respectively;
  - a salt of Na or Li, respectively, wherein the salt is a single-ion conductor.

In a preferred embodiment, the electrochemical cell of the present invention is a Li metal or Li ion electrochemical cell. In a most preferred embodiment, the electrochemical cell of the present invention is a Li metal cell.

In a preferred very particular embodiment, the electrochemical cell comprises:

- a Li metal or Li-ion anode;
- a SSE comprising a blend of:
  - ▪ a metal-cation-conductive polymer comprising alkylene oxide monomeric units as described in any of the above embodiments, and preferably the metal-cation-conductive polymer is PEO; and
  - ▪ a metal salt comprising lithium and an anion polymer comprising styrene monomeric units wherein the phenyl ring is substituted with a sulfonylimidate group as described in any of the above embodiments, and preferably the anion polymer is a poly(sulfonylimidate styrene) of the above depicted formula; and
- a cathode comprising:
  - ▪ a catholyte comprising a blend of:
    - ➢ a metal-cation-conductive polymer which comprises alkylene carbonate monomeric units, and preferably the metal-cation-conductive polymer is poly(propylenecarbonate); and
    - ➢ a metal salt comprising lithium and an anion polymer comprising styrene monomeric units wherein the phenyl ring is substituted with a sulfonylimidate group as described in any of the above embodiments, and preferably the anion polymer is a poly(sulfonylimidate styrene) of the above depicted formula;
  - ▪ an active material which is a lithium nickel-rich layered oxide of formula $LiNi_{1-x}M_xO_2$, wherein M represents at least one metal and $0 \leq x \leq 1$, and wherein M preferably represents Mn and Co; or a polyanion of formula $LiMPO_4$ wherein M is Fe, Mn, Co or Ni, and M is preferably Fe.

The electrochemical cell of the invention further comprises a cathode-side current collector, such as Al foil, and an anode-side current collector, such as Cu. A separator is not necessary as the SSE itself physically separates the anode and cathode.

It is to be understood that when any part of the electrochemical cell comprises different materials, the specific amount of each of said materials is selected from the herein described ranges so as to total 100% wt of the part.

Lastly, cells of the invention can be assembled together to prepare a battery according to the present invention. The cells may be assembled in parallel or in series, or both. In an embodiment, any, several or each of the cells is connected to a module for monitoring cell performance, e.g. for monitoring cell temperature, voltage, charge status or current. Methods of battery assembly are well-known in the art and are reviewed for instance in Maiser, Review on Electrochemical Storage Materials and Technology, AIP Conf. Proc. 1597, 204-218 (2014).

The present invention is also directed to a vehicle, an electronic device or an electrical grid comprising an electrochemical cell or a battery according to the present invention.

Similarly, the invention is directed to the use of an electrochemical cell or a battery according to the present invention, for storing energy, and more particularly for storing energy in a vehicle, an electronic device or an electrical grid.

The vehicle can be an automobile, in particular a heavy automobile such as buses or trucks, a rail vehicle, a marine vehicle, an aircraft or a spacecraft.

Preferably, the electronic device is a portable electronic device, such as a laptop, a tablet, a cellular phone, a smart phone or a smart watch.

Preferably, the electrical grid is associated to a solar panel or a wind turbine.

The invention is further illustrated, but not limited by, the following examples.

## Examples

*Example 1 - Preparation of electrochemical cells according to the present invention*

A cathode layer was prepared by mixing $LiFePO_4$ active material (Sigma-Aldrich, 759546, CAS 15365-14-7), C65 conductive carbon and catholyte, where the latter comprises either LiTFSI (prior art) or LiPSTFSI (present invention) salts, mixed with PPC ($M_w$: 50,000; Sigma-Aldrich, 389021-25G, CAS 25511-85-7), fixing a PC:Li molar ratio of 11:1. The LFP:C65:Catholyte ratio is fixed to 75:5:20 wt. %.

In a different electrochemical cell, a cathode layer (high voltage cathode) was prepared by mixing $Li[NiMnCo]O_2$ (NMC, Sigma-Aldrich, 761001, CAS 346417-97-8) active material, C65 conductive carbon and catholyte. The catholyte comprises either LiTFSI (Sigma Aldrich, 544094) or LiPSTFSI anion polymer (Specific Polymers, SP-5P-9-009, CAS 215815-17-1) salts, mixed with PPC ($M_w$: 50,000; Sigma-Aldrich, 389021-25G, CAS 25511-85-7), fixing a PC:Li molar ratio of 11:1. The NMC:C65:Catholyte ratio is fixed to 75:10:15 wt. %.

Two SSE layers were prepared by mixing either LiTFSI (Sigma Aldrich, 544094) or LiPSTFSI anion polymer (Specific Polymers, SP-5P-9-009, CAS 215815-17-1) salts with PEO ($M_w$ = 5 M; Sigma-Aldrich, 189472; CAS 25322-68-3) in deionised water. The formulation of the composite membrane is fixed to an EO:Li molar ratio of 20:1 in both cases.

Li metal was employed as the anode layer in every case. The positive electrode (disk of 12 mm in diameter), solid electrolyte (disk of 16 mm in diameter) and Li metal (disk of 500 $\mu$m thickness and 14 mm in diameter) were assembled in coin cell CR2032 (Hohsen Corp.) between two stainless steel spacers of 600 $\mu$m thickness.

The following specific electrochemical cells were prepared:

- CELL1 (prior art): electrochemical cell comprising Li-metal anode PEO+**LiTFSI** SSE, and cathode comprising LFP active material, conductive carbon, PPC+**LiTFSI** catholyte.
- CELL2 (comparative): electrochemical cell comprising Li-metal anode, PEO+**LiTFSI** SSE, and a cathode comprising LFP active material, conductive carbon, PPC+**LiPSTFSI** blend catholyte.
- CELL3 (invention): electrochemical cell comprising Li-metal anode, PEO+**LiPSTFSI** blend SSE, and a cathode comprising LFP active material, conductive carbon, PPC+**LiPSTFSI** blend catholyte.
- CELL4 (invention): electrochemical cell comprising Li-metal anode, PEO+**LiPSTFSI** blend SSE, and a cathode comprising NMC high-voltage active material, conductive carbon, PPC+**LiPSTFSI** blend catholyte.

The cells are graphically depicted at Figure 1.

*Example 2 - Conductivity test*

The rate capability of electrochemical cells CELL1-3 was evaluated at C/20 and C/10. Galvanostatic cycling of these solid-state cells was performed between 3.7 and 2.7 V at 70 °C. First 35 cycles were done at C/20; C/10 was used onwards. Results are shown in Figure 2.

Configuration CELL1, which presents mobile anions in both the electrolyte and the electrode (LiTFSI), shows a capacity decay from the first cycle, with poor coulombic efficiency. After 25 cycles the capacity of the cell is null.

Immobilizing the anion in the catholyte, configuration CELL2, shows a similar behavior. Capacity rapidly decays reaching null values after 25 cycles.

CELL3, which has immobilized anions in both catholyte and electrolyte displays an excellent behavior upon cycling. It was cycled at C/20 for 35 cycles showing 169 mAh $g^{-1}$, and then cycled at C/10 for over 70 cycles with capacity values between 163 and 150 mAh $g^{-1}$. Stable cycling is observed over the whole 120 cycles shown in Figure 2.

*Example 3 - Conductivity test under high voltage operation*

The rate capability of CELL4 was evaluated at C/20. Galvanostatic cycling of the solid-state cell was performed between 4.2 and 2.7 C at 70 °C. Results are shown in Figure 3.

Stable cycling was observed. Minimum PEO degradation was observed, maintaining 100 mAh $g^{-1}$ after 100 cycles, confirming that different polymers can be employed at different compartments of the same cell without detrimental salt diffusion gradients.

**Claims**

**1.** Secondary electrochemical cell comprising:

- An anode suitable for reversibly incorporating metal cations;
- A solid-state electrolyte (SSE) comprising:
  - a metal-cation-conductive polymer;
  - a metal cation salt, wherein the salt is a single-ion conductor;
- A cathode suitable for reversibly incorporating metal cations, the cathode comprising a catholyte which comprises:
  - a metal-cation-conductive polymer;
  - a metal cation salt, wherein the salt is a single-ion conductor.

**2.** Secondary electrochemical cell according to claim 1, wherein the anode comprises an active material selected from a carbonaceous material suitable for reversibly intercalating metal cations; a metal oxide or metalloid oxide suitable for reversibly intercalating metal cations; a metal or metalloid suitable for reversibly forming an alloy with metal cations; a transition metal- or metalloid-oxide, -sulfide, -selenide, -fluoride, -nitride or - phosphide, suitable for reversibly incorporating metal cations by reversible conversion; a metal suitable for respectively stripping/plating metal cations therefrom/thereon; and any mixture thereof.

**3.** Secondary electrochemical cell according to any preceding claim, wherein none of the monomeric units comprised in one of the SSE metal-cation-conductive polymer or the catholyte metal-cation-conductive polymer are comprised in the other of the SSE metal-cation-conductive polymer or the catholyte metal-cation-conductive polymer.

**4.** Secondary electrochemical cell according to any preceding claim, wherein the SSE metal-cation-conductive polymer comprises monomeric units selected from alkylene oxide; alkylenimine; alkylene sulphide; alkylene carbonate; acrylate; siloxane; vinyl alcohol; vinyl acetate; vinyl halide; acrylonitrile; vinylpyrrolidone; ε-caprolactone; or aniline units.

**5.** Secondary electrochemical cell according to any preceding claim, wherein the SSE metal-cation-conductive polymer comprises ethylene oxide monomeric units.

**6.** Secondary electrochemical cell according to any preceding claim, wherein the catholyte metal-cation-conductive polymer comprises monomeric units selected from alkylenimine; alkylene sulphide; alkylene carbonate; acrylate; siloxane; vinyl alcohol; vinyl acetate; vinyl halide; acrylonitrile; vinylpyrrolidone; ε-caprolactone; aniline; pyrrole; *N*-methyl-malonic amide; and 3,4-ethylenedioxy-thiophene units.

**7.** Secondary electrochemical cell according to any preceding claim, wherein the catholyte metal-cation-conductive polymer comprises propylenecarbonate monomeric units.

**8.** Secondary electrochemical cell according to any preceding claim, wherein the SSE single-ion conductor salt and the catholyte single-ion conductor salt are each independently selected from a single-ion conductor salt comprising an anion selected from a carboxylate; sulfonate; sulfonylimidate; borate; phosphate; and chlorate.

**9.** Secondary electrochemical cell according to any preceding claim, wherein the SSE single-ion conductor salt and the catholyte single-ion conductor salt are each independently selected from an anion polymer of formula:

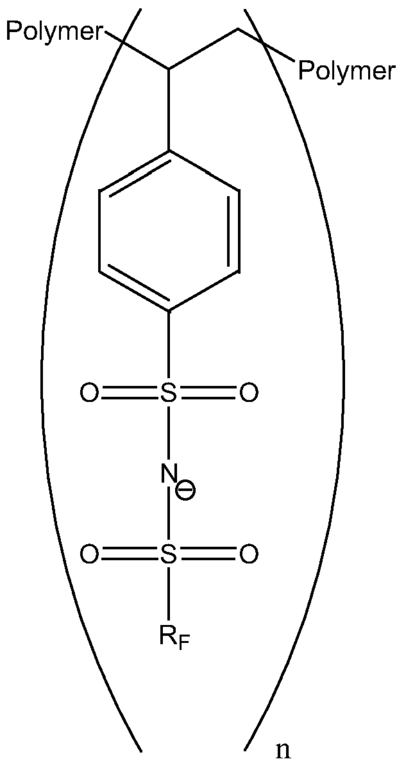

wherein n ranges from 50 to 3000; Polymer represents the remainder of the polymer structure; and $R_F$ is F, $C_1$-$C_6$ alkyl, $C_2$-$C_6$ alkenyl, or $C_2$-$C_6$ alkynyl group, wherein the alkyl, alkenyl or alkynyl is fully or partially substituted with F.

**10.** Secondary electrochemical cell according to any preceding claim, wherein the cathode comprises an active material selected from a lithium nickel-rich layered oxide of formula $Li_yNi_{1-x}M_xO_2$, wherein M represents at least one metal and $0 \leq x \leq 1$, $0.8 \leq y \leq 1.2$; a spinel oxide of formula $LiNi_{2-x}M_xO_4$, wherein M represents at least one transition metal and $0 \leq x \leq 2$; a lithium-rich layered oxide of formula $Li_{1+x}M_{1-x}O_2$ wherein M represents at least one transition metal and $0 \leq x \leq 1$; a lithium polyanion of formula $Li_2MSiO_4$ wherein M is Mn, Co or Ni, of formula $LiMPO_4$ wherein M is at least one of Co, Mn, Fe or Ni, of formula $Li_2MP_2O_7$ wherein M is Mn, Co or Ni or of formula $Li_3V_2(PO_4)_3$, $Li_2VOP_2O_7$, or $LiVP_2O_7$; and a phosphate or sulfate of formula $Li_yMXO_4Z$; wherein y = 0, 1, 2; M = transition metal; X = P, S; Z = F, O, OH.

**11.** Secondary electrochemical cell according to any preceding claim, wherein the cathode is suitable for high voltage operation.

**12.** Secondary electrochemical cell according to any preceding claim, wherein the electrochemical cell presents a layered configuration comprising:

- an anode layer, which presents a surface that contacts a SSE layer;
- a cathode layer, which presents a surface that contacts the SSE layer;
- the SSE layer, which presents a first surface that contacts the anode layer, and a second surface that contacts the cathode layer.

**13.** Secondary electrochemical cell according to claim 12, wherein the cathode layer comprises a catholyte layer which comprises the cathode surface which contacts the SSE layer, and which separates the SSE layer from the remainder

of the cathode layer.

**14.** Secondary electrochemical cell according to any preceding claim, which is a Li-ion or Li metal electrochemical cell.

**15.** Vehicle, electronic device or electrical grid comprising at least one electrochemical cell as defined in any one of the preceding claims.

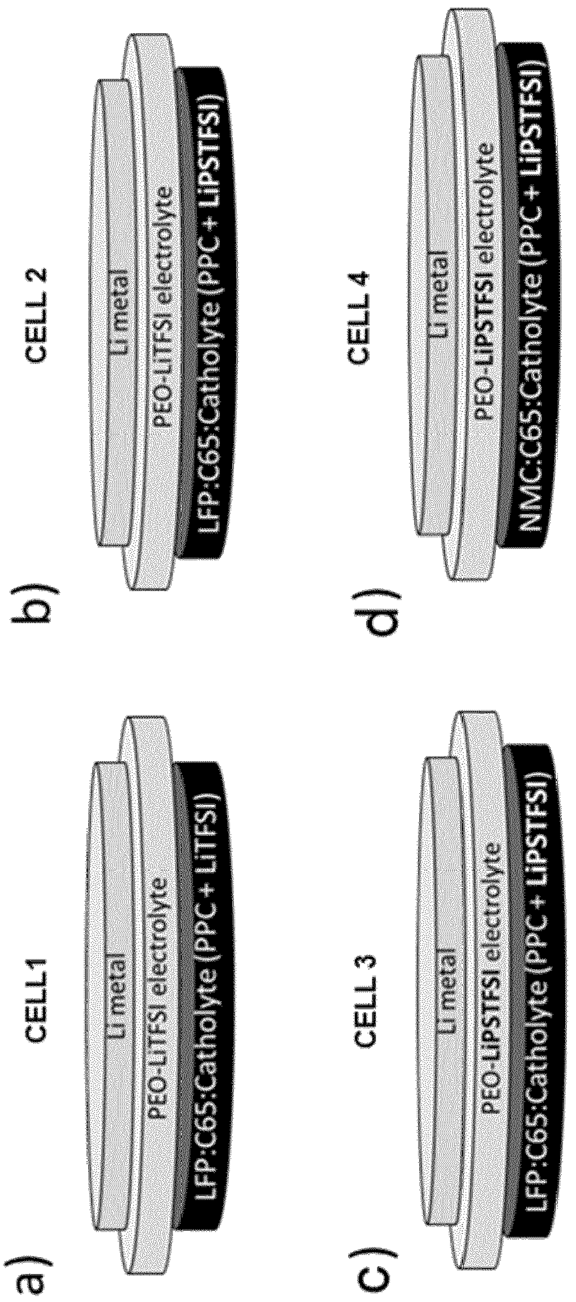
a)
CELL1
Li metal
PEO-LiTFSI electrolyte
LFP:C65:Catholyte (PPC + LiTFSI)
b)
CELL 2
Li metal
PEO-LiTFSI electrolyte
LFP:C65:Catholyte (PPC + LiPSTFSI)
c)
CELL 3
Li metal
PEO-LiPSTFSI electrolyte
LFP:C65:Catholyte (PPC + LiPSTFSI)
d)
CELL 4
Li metal
PEO-LiPSTFSI electrolyte
NMC:C65:Catholyte (PPC + LiPSTFSI)

Figure 1

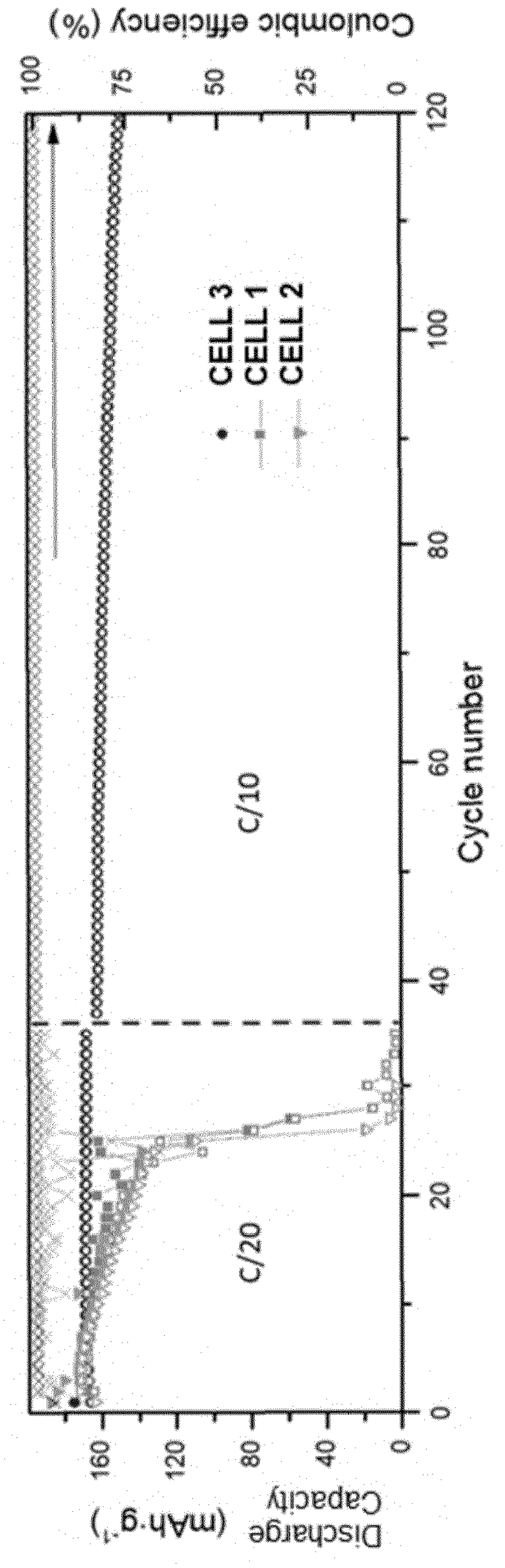
Coulombic efficiency (%)
Discharge Capacity (mAh·g-1)
Cycle number
CELL 3
CELL 1
CELL 2
C/20
C/10

Figure 2

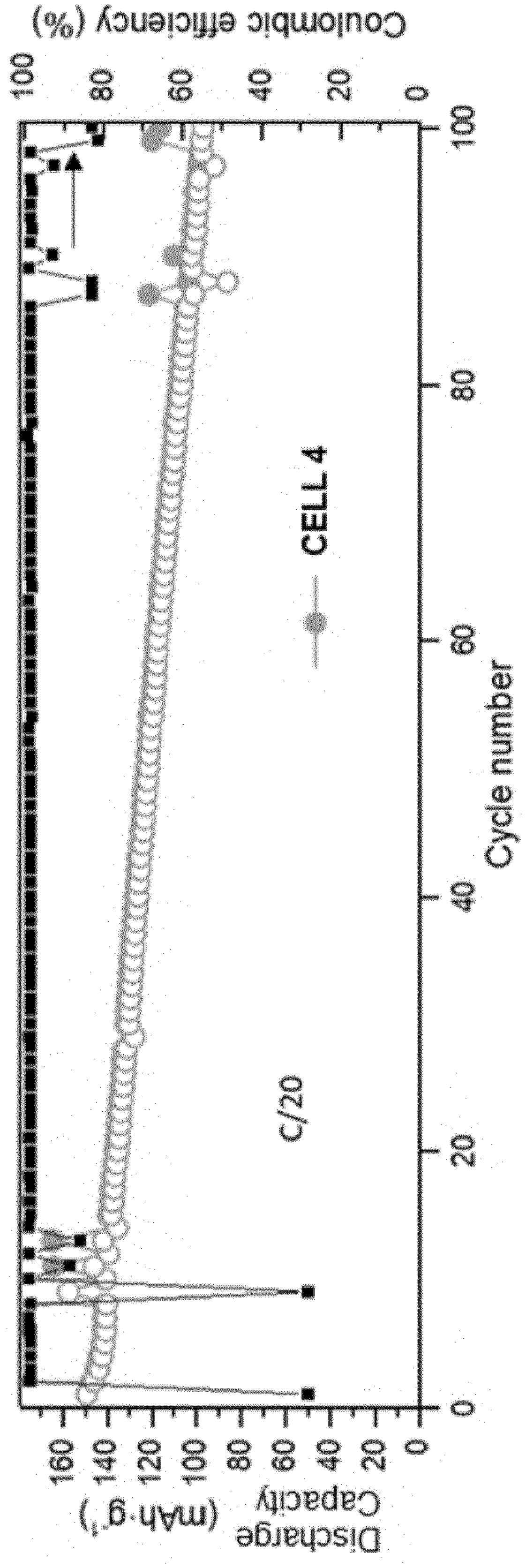
Coulombic efficiency (%)
Discharge Capacity (mAh·g-1)
Cycle number
CELL 4
C/20
0
20
40
60
80
100
120
140
160


Figure 3

Europäisches Patentamt
European Patent Office
Office européen des brevets

# EUROPEAN SEARCH REPORT

Application Number
EP 20 38 2549

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/185337 A2 (BOSCH GMBH ROBERT [DE]) 10 December 2015 (2015-12-10)<br>* abstract *<br>* page 1, lines 24,25 *<br>* claims 1-4, 6-9, 11, 12, 15, 21, 23-25 *<br>----- | 1-9, 11-15 | INV.<br>H01M4/1391<br>H01M4/36<br>H01M4/525<br>H01M10/052<br>H01M10/0565 |
| X | EP 0 856 538 A1 (DAISO CO LTD [JP]) 5 August 1998 (1998-08-05)<br>* abstract *<br>* claims 1-13, 15-19, 24, 29-32, 34 *<br>----- | 1-7,9-15 | |

TECHNICAL FIELDS SEARCHED (IPC)
H01M

The present search report has been drawn up for all claims

1

| Place of search | Date of completion of the search | Examiner |
|---|---|---|
| Munich | 10 November 2020 | Riederer, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 20 38 2549

This annex lists the patent family members relating to the patent documents cited in the above-mentioned European search report. The members are as contained in the European Patent Office EDP file on
The European Patent Office is in no way liable for these particulars which are merely given for the purpose of information.

10-11-2020

| Patent document cited in search report | Publication date | Patent family member(s) | Publication date |
|---|---|---|---|
| WO 2015185337 A2 | 10-12-2015 | CN 106537658 A | 22-03-2017 |
| | | DE 102014221731 A1 | 21-01-2016 |
| | | US 2017194633 A1 | 06-07-2017 |
| | | WO 2015185337 A2 | 10-12-2015 |
| EP 0856538 A1 | 05-08-1998 | AU 3865797 A | 06-03-1998 |
| | | BR 9706631 A | 23-11-1999 |
| | | CA 2235166 A1 | 26-02-1998 |
| | | CN 1199408 A | 18-11-1998 |
| | | DE 69717246 T2 | 28-08-2003 |
| | | EP 0856538 A1 | 05-08-1998 |
| | | ES 2187803 T3 | 16-06-2003 |
| | | JP 3215440 B2 | 09-10-2001 |
| | | KR 20000064280 A | 06-11-2000 |
| | | TW 446731 B | 21-07-2001 |
| | | US 6162563 A | 19-12-2000 |
| | | US 2002012849 A1 | 31-01-2002 |
| | | WO 9807772 A1 | 26-02-1998 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **ZHOU et al.** *Adv. Mater.,* 2018, vol. 1805574, 1-7
- **FANG et al.** *Adv. Energy Mater,* 2020, vol. 10, 1902485
- **AZIZ et al.** *Journal of Science: Advanced Materials and Devices,* 2018, (1), 1-17
- *CHEMICAL ABSTRACTS,* 25322-68-3
- Functionality of Molecular Systems. **HONDA.** From Molecular Systems to Molecular Devices. Springer-Verlag, 1999, vol. 2
- **HATADA et al.** Macromolecular design of polymeric materials. Marcel Dekker, Inc, 1997
- **J. ROLLAND et al.** *Polymer,* 2015, vol. 68, 344-352
- **C. JANGU et al.** *Macromolecules,* 2015, vol. 48, 4520-4528
- **S.-W. RYU et al.** *J. Electrochem. Soc.,* 2005, vol. 152, A158-A163
- **D. R. SADOWAY et al.** *J. Power Sources,* 2001, vol. 97-98, 621-623
- **H. HAN et al.** *J. Power Sources,* 2011, vol. 196, 3623-3632
- **H. HAN et al.** *Electrochem. Commun.,* 2011, vol. 13, 265-268
- **H. ZHANG et al.** *J. Power Sources,* 2015, vol. 296, 142-149
- **H. ZHANG et al.** *J. Fluorine Chem.,* 2015, vol. 174, 49-61
- **R. MEZIANE et al.** *Electrochim. Acta,* 2011, vol. 57, 14-19
- **M. ANNE MEHTA et al.** *Electrochim. Acta,* 2000, vol. 45, 1175-1180
- **M. A. MEHTA et al.** *J. Power Sources,* 1999
- **A. BLAZEJCZYK et al.** *J. Electrochem. Soc.,* 2004, vol. 151, A1762-A1766
- **M. KALITA et al.** *Electrochim. Acta,* 2005, vol. 50, 3942-3948
- **H. ZHAO et al.** *ACS Appl. Mater. Interfaces,* 2015, vol. 7, 19335-19341
- **H. ZHAO et al.** *ACS Appl. Mater. Interfaces,* 2015, vol. 7, 19494-19499
- **LI et al.** *Chem Soc Rev,* 2017, vol. 46, 3006-3059
- **LYU et al.** *Sustainable Materials and Technologies,* 2019, vol. 21, e00098
- *CHEMICAL ABSTRACTS,* 1333-86-4
- **MAISER.** Review on Electrochemical Storage Materials and Technology. *AIP Conf. Proc.,* 2014, vol. 1597, 204-218
- *CHEMICAL ABSTRACTS,* 15365-14-7
- *CHEMICAL ABSTRACTS,* 25511-85-7
- *CHEMICAL ABSTRACTS,* 346417-97-8
- *CHEMICAL ABSTRACTS,* 215815-17-1